# EUROPEAN PATENT SPECIFICATION

(11) **EP 2 703 158 B1**
(45) Date of publication and mention of the grant of the patent: **12.07.2017**
(21) Application number: 12777838.9
(22) Date of filing: 10.04.2012
(51) Int. Cl.: B32B 27/08, B32B 27/20, B44C 3/02, B32B 27/36

(54) **ENVIRONMENTALLY FRIENDLY DECO SHEET HAVING OUTSTANDING MOULDING PROPERTIES AND GLOSSINESS**
UMWELTFREUNDLICHE DEKORFOLIE MIT HERVORRAGENDEN FORM- UND GLANZEIGENSCHAFTEN
FEUILLE DÉCO ÉCOLOGIQUE AYANT D'EXCEPTIONNELLES PROPRIÉTÉS DE MOULAGE ET BRILLANT

(30) Priority: 27.04.2011 KR 20110039457
(43) Date of publication of application: 05.03.2014
(73) Proprietor: LG Hausys, Ltd., Seoul 07326 (KR)
(72) Inventor: YOU, Sang Won, Daejeon 301-150 (KR); LEE, Eung Kee, Gyeonggi-do 431-050 (KR); LEE, Min Hee, Gunpo-si Gyeonggi-do 435-060 (KR); SHIN, Chang Hak, Seoul 137-072 (KR)
(74) Representative: Zacco Denmark A/S
(86) International application number: PCT/KR2012/002704
(87) International publication number: WO 2012/148099

(56) References cited:
- EP-A1- 1 057 656
- EP-B1- 0 875 374
- WO-A1-2006/057557
- JP-A- 2004 050 777
- JP-A- 2004 114 322
- JP-A- 2005 104 048
- JP-A- 2006 181 753
- JP-A- 2008 162 058
- JP-A- 2008 162 058
- KR-A- 20080 086 618
- KR-B1- 100 779 254
- KR-Y1- 200 427 573

## Description

### [Technical Field]

The present invention relates to decorative sheets for furniture, sinks, and the like, and more particularly, to an environmentally friendly decorative sheet which exhibits outstanding gloss and permits three dimensional molding even onto a severely curved objects.

### [Background Art]

Decorative sheets are used for decorating materials such as furniture, sinks, doors, and the like.

Conventionally, polyvinyl chloride (PVC) sheets have been used as decorative sheets. With various advantages such as low price, excellent processability, thermal deformability, excellent elongation, and the like, PVC sheets have been widely used for a variety of products.

However, PVC sheets have a problem of generating a large amount of dioxin upon burning. Dioxin is a typical endocrine disruptor that is extremely stable and resistant to decomposition. Thus, once absorbed into the human body, dioxin is not easily discharged from the body and accumulates therein. As a result, dioxin can cause cancer, severe reproductive system disorders, developmental disorders, and the like. Moreover, dioxin can damage the endocrine system.

Due to harmfulness of polyvinyl chloride on the human body, regulations concerning polyvinyl chloride-based products are being strengthened.

In recent years, to replace polyvinyl chloride, environmentally friendly materials have been developed, and among these materials, polyolefins and polyesters are representative materials. Particularly, among polyesters, polyethylene terephthalate (PET)-based sheets are proposed.

However, a decorative sheet composed only of PET has very inferior elongation as compared to a sheet composed of polyvinyl chloride when molded for products. Moreover, the resin is composed of crystalline polymers, which makes it difficult to apply to three-dimensional molding due to whitening caused by polymer crystals, and thus can only be applied to two dimensional molding.

### [Disclosure]

### [Technical Problem]

It is an aspect of the present invention to provide a decorative sheet, which is more environmentally friendly than PVC sheets and has a low and wide range of molding temperatures as in the PVC sheet, thereby providing outstanding molding properties.

### [Technical Solution]

In accordance with an aspect of the invention, an environmentally friendly decorative sheet includes: a front surface layer formed of a polyethylene terephthalate glycol (PETG) resin; a rear surface layer facing the front surface layer and formed of a polyethylene terephthalate glycol (PETG) resin; and an interlayer interposed between the front and rear surface layers and formed of a composite resin.

### [Advantageous Effects]

Environmentally friendly decorative sheets according to embodiments of the invention do not generate endocrine disruptors and thus are more environmentally friendly than PVC sheets, and employ a resin having excellent printability such as PETG, and the like, thereby enabling realization of various decorative patterns.

In addition, the environmentally friendly decorative sheets according to the embodiments have a triple-layer structure in which PET and PETG resins are stacked, thereby achieving cost reduction while enabling overlay molding and membrane molding.

### [Description of Drawings]

Fig. 1 is a sectional view of an environmentally friendly decorative sheet according to one embodiment of the present invention.
Fig. 2 is a sectional view of an environmentally friendly decorative sheet according to another embodiment of the present invention.

### [Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and a thorough understanding of the invention by those skilled in the art. The scope of the present invention is defined only by the claims. Like components will be denoted by like reference numerals throughout the specification.

Now, exemplary embodiments of the invention will be described in detail with reference to the accompanying drawings.

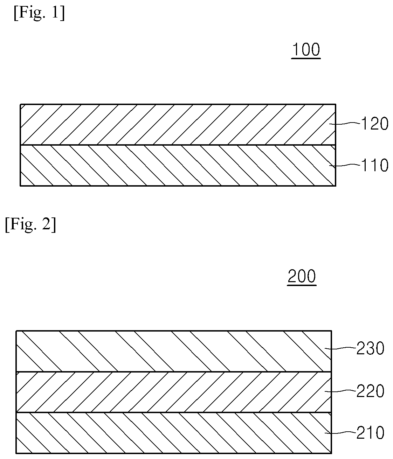

Fig. 1 is a sectional view of an environmentally friendly decorative sheet in which the environmentally friendly decorative sheet has a double-layer structure.

Referring to Fig. 1, an environmentally friendly decorative sheet 100 includes a first layer 110 and a second layer 120 stacked on the first layer 110.

The first layer 110 may be formed of a single resin or a composite resin. When the first layer 110 is formed of a single resin, polyethylene terephthalate (PET) may be used. On the contrary, when the first layer 110 is formed of the composite resin, a composite of a PET resin and an ester-based resin may be used.

The second layer 120 may be formed of polyethylene terephthalate glycol (PETG). The PETG resin used for the second layer 120 is an amorphous polymer, which does not entail whitening on curved surfaces upon molding through a membrane process.

The second layer 120 is formed of a single component, that is, PETG, which provides excellent processibility and transparency. In addition, the PETG resin is an environmentally friendly material capable of replacing PC, PVC, and the like, and may be molded in various ways according to application when used to form a sheet having a laminated structure with the first layer and an interlayer described below. Particularly, since the PETG resin has properties suitable for various molding methods, such as plastic sheet molding, injection molding, extrusion blow molding, tubing and profile extrusion, and the like, it is easy to manufacture an environmentally friendly decorative sheet using only the PETG resin.

The PETG resin used alone for the second layer has a glass transition temperature of 80°C and has no crystalline property. Thus, the case of using PETG resin alone shows superior curved surface processability to PET resin alone. More specifically, curved surface processability is judged from film cracking generated when being processed on curved surfaces and whitening on curved surfaces, and therefore, curved surface processability of a whole decorative sheet can be improved by using PETG resin alone. On the contrary, when the ester-based resin, which shows behavior of a crystalline polymer and has a low glass transition temperature, is used alone for the second layer, there is a disadvantage in that cracking and whitening occur upon processing on curved surfaces.

Such a double-layer decorative sheet 100 may be manufactured through T-die extrusion. In this case, a feed block is disposed in front of the T-die, such that the decorative sheet 100 can be manufactured using a resin discharged from each of two extruders. The thickness of each layer 110, 120 may be determined depending on discharge rate upon co-extrusion. In addition, the decorative sheet 100 manufactured by extrusion or co-extrusion may have a thickness of about 200 µm to about 1,000 µm depending on extrusion equipment, process conditions, and the like.

When the first layer 110 is formed of a single resin, the first layer 110 may be formed to have a thickness 2 to 4 times greater than that of the second layer 120. If the thickness of the first layer 110 is less than two times the thickness of the second layer 120, manufacturing costs can increase due to increase in the amount of PETG resin, which is relatively expensive. If the thickness of the first layer 110 exceeds four times the thickness of the second layer 120, whitening can occur due to crystallization of the PET resin in manufacture of the sheet, thereby causing discoloration of non-white pigments added in manufacture of the sheet. Further, upon three-dimensional membrane molding, the sheet can be fractured due to the occurrence of cracking.

The PET resin may include SKTPET (SK Chemicals Co., Ltd.), and the like, and the PETG resin may include SKYGREEN (SK Chemicals Co., Ltd.), Spectar (Eastman Chemical Company), Eastar (Eastman Chemical Company), and the like.

However, since PETG has a relatively high glass transition temperature (Tg) of about 80°C, a PETG sheet requires a high molding temperature

On the other hand, the PET resin or the composite of the PET resin and the ester-based resin used as a material for the first layer 110 decreases the glass transition temperature (Tg) and the molding temperature of the PETG resin, whereby the amount of the relatively expensive PETG resin used for the sheet can be lowered, thereby reducing manufacturing costs.

The ester-based resin may include at least one selected from among polybutylene terephthalate (PBT), polypropylene terephthalate (PPT), polyethylene naphthalate (PEN), and polycyclohexylenedimethylene terephthalate (PCT).

When the first layer is formed of the composite resin, the ester-based resin may be present in an amount of 5 parts by weight to 10 parts by weight based on 100 parts by weight of the composite resin. If the ester-based resin is present in an amount of less than 5 parts by weight based on 100 parts by weight of the composite resin, the degree of lowering the glass transition temperature (Tg) and the molding temperature of the whole resin can become insignificant. On the contrary, if the ester-based resin is present in an amount of more than 10 parts by weight based on 100 parts by weight of the composite resin, the glass transition temperature (Tg) and the molding temperature of the whole resin can be excessively lowered, causing too poor processability to manufacture the sheet through a rapid decrease in viscosity in manufacture of a sheet through extrusion. Moreover, surface processability of the sheet can also be deteriorated.

When the first layer 110 formed of the composite resin includes the ester-based resin within this range, the whole resin of the decorative sheet 100 may have a glass transition temperature (Tg) of 70 ± 3°C. This temperature is about 10°C lower than that of the PETG resin having a glass transition temperature (Tg) of about 80°C.

The decorative sheet 100 may further include a pigment, which may be present in an amount of 0.1 parts by weight to 30 parts by weight based on 100 parts by weight of the whole resins of the decorative sheet.

The pigment may include at least one selected from among white, black, yellow, blue, red, green pigments, and mixtures thereof.

Particularly, the white pigment may include inorganic particles, such as titanium oxide, calcium carbonate, barium sulfate, magnesium carbonate, and the like, and the black pigment may include carbon black. As the yellow, blue, red, and green pigments, any commercially available materials used in the art may be used without limitation.

If the pigment is present in an amount of less than 0.1 parts by weight based on 100 parts by weight of the whole resin, the decorative sheet can be deteriorated in hiding and coloring properties. If the pigment is present in an amount of more than 30 parts by weight based on 100 parts by weight of the whole resin, the resin can suffer from reduction in viscosity, causing processing problems.

The environmentally friendly decorative sheet according to the embodiment as described above is more environmentally friendly than typical PVC sheets, and has a low and wide range of molding temperatures as in PVC, thereby ensuring excellent moldability.

In addition, the environmentally friendly decorative sheet according to the embodiment employs a laminated structure in which the PET resin and the PETG resin are stacked, thereby achieving cost reduction while allowing overlay molding and membrane molding.

Fig. 2 is a sectional view of an environmentally friendly decorative sheet according to another embodiment of the invention, in which the environmentally friendly decorative sheet has a triple-layer structure.

Referring to Fig. 2, an environmentally friendly decorative sheet 200 includes a front surface layer 210, an interlayer 220, and a rear surface layer 230. The front surface layer 210 and the rear surface layer 230 face each other, and the interlayer 220 is interposed between the front surface layer 210 and the rear surface layer. As such, the environmentally friendly decorative sheet 200 has a triple-layer structure in which the front surface layer 210, the interlayer 220 and the rear surface layer 230 are sequentially stacked.

Each of the front surface layer 210 and the rear surface layer 230 may be formed of a polyethylene terephthalate glycol (PETG) resin. The PETG resin used for the front surface layer 210 and the rear surface layer 230 is an amorphous polymer, which does not suffer whitening at curved surfaces upon molding through a membrane process.

The interlayer 220 is formed of a composite resin which composite resin is a composite of a PET resin and an ester-based resin.

A decorative sheet having a three or multi-layer structure may also be manufactured through T-die co-extrusion. In this case, a feed block is disposed in front of the T-die, such that the triple-layer decorative sheet 200 can be manufactured using the composite resin discharged from each of two extruders. In the triple-layer sheet, the thickness ratio between layers may be determined by a discharge rate upon extrusion.

When a pigment is applied to all of the front surface layer 210, the interlayer 220 and the rear surface layer 230, manufacturing costs can be increased. In addition, when the pigment is applied only to the front surface layer 210 or the rear surface layer 230, hiding properties of the decorative sheet can be deteriorated. Therefore, it is desirable that the pigment be embedded between the front surface layer 210 and the rear surface layer 230 and applied only to the interlayer 220 formed of a single resin or a composite resin.

The pigment may be present in an amount of 0.1 parts by weight to 30 parts by weight based on 100 parts by weight of the whole resins of the decorative sheet. If the pigment is present in an amount of less than 0.1 parts by weight based on 100 parts by weight of the whole resin, the decorative sheet can be deteriorated in hiding and coloring properties. If the pigment is present in an amount of more than 30 parts by weight based on 100 parts by weight of the whole resin, the resin can suffer from reduction in viscosity, causing processing problems.

When the interlayer 220 is formed of a single resin, the interlayer 220 may be formed to a thickness 2 to 4 times thicker than that of the front surface layer 210 or the rear surface layer 230. Since the single resin forming the interlayer 220 is composed of the PET resin, whitening can occur due to crystallization of the PET resin upon molding the sheet if the interlayer 220 has a thickness more than four times the thickness of the front surface layer 210 or the rear surface layer 230.

If the interlayer 220 has a thickness less than 2 times the thickness of the front surface layer 210 or the rear surface layer 230, manufacturing costs can increase due to increase in the amount of PETG resin, which is relatively expensive.

As described above, according to the embodiments of the invention, in manufacture of a decorative sheet, a PET resin and an ester-based resin is disposed between PETG resins, whereby the glass transition temperature of the resin can be lowered by about 10°C while providing a broader range of molding temperatures.

As such, according to the embodiments of the invention, since the decorative sheet is manufactured by lowering the glass transition temperature of the resin below the glass transition temperature of PVC sheets while securing softness of the resin without using PVC which generates endocrine disruptors, the decorative sheet may secure sufficient elongation for three-dimensional molding.

Further, the decorative sheets according to the embodiments of the invention may even be molded onto a severely curved object without whitening, and employ a resin having excellent printability such as PETG, and the like, thereby enabling realization of various decorative patterns.

### Examples

Next, the present invention will be described in more detail with reference to some examples which examples do not fall under the claims. However, it should be noted that these examples are provided for illustration only.

A description of details apparent to those skilled in the art will be omitted.

### 1. Preparation of sheets

### Example 1

After ejecting 500 g of PET and 500 g of PETG to form first and second layers, respectively, the resultant was subjected to extrusion to form a 0.5 mm thick sheet.

### Example 2

After ejecting 600 g of PET and 400 g of PETG to form first and second layers, respectively, the resultant was subjected to extrusion to form a 0.5 mm thick sheet.

### Example 3

After ejecting 550 g of a composite resin including 500 g of PET and 50 g of PBT resin and 450 g of PETG to form first and second layers, respectively, the resultant was subjected to extrusion to form a 0.5 mm thick sheet.

### Example 4

After ejecting 500 g of PET to form an interlayer, the resultant was subjected to extrusion to form a 0.4 mm thick sheet. Then, 250 g of PETG was ejected onto upper and lower sides of the interlayer sheet to form front and rear surface layers, followed by extrusion to form a 0.2 mm thick sheet.

### Comparative Example 1

After ejecting 1,000 g of PETG to form a single layer, the resultant was subjected to extrusion to form a 0.5 mm thick sheet.

### Comparative Example 2

After ejecting 450 g of PET and 550 g of a composite resin including 500 g of PET resin and 50 g of PBT to form first and second layers, the resultant was subjected to extrusion to form a 0.5 mm thick sheet.

### Comparative Example 3

After ejecting 450 g of PET alone, the resultant was subjected to extrusion to form a 0.5 mm thick first layer. Here, 450 g of PETG and 50 g of a polyester adhesive (Vylon 200, Toyobo Co., Ltd., Japan) were mixed at 70°C and 800 rpm in an agitator (Shinaplatech Co., Ltd., Korea). Then, the mixture was supplied into a twin-screw extruder and melted to form a 0.2 mm thick second layer on the first layer through a T-die.

### 2. Moldability evaluation

To evaluate moldability of sheets prepared in Examples 1 to 3 and Comparative Example 1, elastic modulus of the sheets were measured via dynamic mechanical analysis (DMA).

### 3. Results of moldability evaluation

Table 1 shows evaluation results as to the moldability and glass transition temperatures of the sheets prepared in Examples 1 to 4 and Comparative Examples 1 to 3.

**Table 1**

| | Temperature range causing elastic modulus degradation (°C) | Glass transition temperature (°C) |
|---|---|---|
| Example 1 | 70∼88 | 78 |
| Example 2 | 70∼83 | 77 |
| Example 3 | 59∼77 | 72 |
| Example 4 | 60∼72 | 70 |
| Comparative Example 1 | 80∼93 | 80 |
| Comparative Example 2 | 82∼98 | 85 |
| Comparative Example 3 | 85∼95 | 82 |

Referring to Table 1, it could be seen that the sheets formed of PET and PETG in Examples 1 and 2 underwent decrease in elastic modulus at temperatures of less than 88°C, and had a glass transition temperature of 75±3°C.

In addition, it could be seen that the sheet formed of the composite of PET and PBT resins and the PETG resin in Example 3 underwent decrease in elastic modulus at temperatures of less than 77°C, and had a glass transition temperature of 72°C, which is 5°C ~ 6°C lower than the glass transition temperatures of the sheets prepared in Examples 1 and 2. Further, it could be seen that the sheet including the interlayer formed only of PET and the front and rear surface layers formed of PETG in Example 4 underwent decrease in elastic modulus at significantly low temperatures and had a significantly low glass transition temperature.

On the contrary, the sheet having a single layer of PETG in Comparative Example 1 underwent decrease in elastic modulus at a relatively higher temperature than the sheets prepared in Examples 1 to 4, and had a glass transition temperature of 80°C, which is about 8°C higher than that of the sheet prepared in Example 3 and 10°C higher than that of the sheet prepared in Example 4.

Thus, it could be seen that sheets prepared in Examples 1 to 4 can be molded at lower molding temperatures than the sheet prepared in Comparative Example 1.

Furthermore, as the second layer of the sheet prepared in Comparative Example 2 was formed of the composite of PET and PBT resins, and the second layer of the sheet prepared in Comparative Example 3 was formed of PETG and the adhesive, these sheets underwent decrease in elastic modulus at higher temperatures and had higher glass transition temperatures than the sheets prepared in Examples 1 to 4. Thus, it could be seen that the sheets prepared in Comparative Examples 2 and 3 cannot be molded at low molding temperatures. Therefore, it could be seen that, in manufacture of a decorative sheet having a laminated structure, a sheet including a single layer formed using PETG alone can be easily molded at a low molding temperature, as compared with a sheet including PETG and other resins or adhesives.

## Claims

1. An environmentally friendly decorative sheet comprising:
a front surface layer formed of a polyethylene terephthalate glycol (PETG) resin;
a rear surface layer facing the front surface layer and formed of a polyethylene terephthalate glycol (PETG) resin; and
an interlayer interposed between the front and rear surface layers and formed of a composite resin comprising a polyethylene terephthalate (PET) resin and an ester-based resin wherein the ester-based resin comprises at least one selected from among polybutylene terephthalate (PBT), polypropylene terephthalate (PPT), polyethylene naphthalate (PEN), and polycyclohexylenedimethylene terephthalate (PCT) and the interlayer comprises 3 parts by weight to 10 parts by weight of the ester-based resin based on 100 parts by weight of the composite resin.

2. A decorative sheet according to claim 1, further comprising 0.1 parts by weight to 30 parts by weight of a pigment based on 100 parts by weight of the whole resins of the decorative sheet.

3. The decorative sheet according to claim 2, wherein the pigment is contained only in the interlayer formed of the composite resin.

## Patentansprüche

1. Umweltfreundliche Dekorfolie umfassend:
eine Vorderseiteschicht, die aus einem Polyethylenterephthalatglycol-(PETG)-Harz gebildet ist;
eine der Vorderseiteschicht zugewandte Hinterseiteschicht, die aus einem Polyethylenterephthalatglycol- (PETG)-Harz gebildet ist;
eine Zwischenschicht, die zwischen der Vorderseite- und der Hinterseiteschicht eingelegt ist und aus einem Verbundharz umfassend ein Polyethylenterephthalat- (PET)-Harz und ein esterbasiertes Harz gebildet ist, wobei das esterbasierte Harz mindestens eines ausgewählt aus Polybutylenterephthalat (PBT), Polypropylenterephthalat (PPT), Polyethylennaphthalat (PEN) und Polycyclohexylendimethylenterephthalat (PCT) umfasst, und die Zwischenschicht 3 Gewichtsteile bis 10 Gewichtsteile des esterbasierten Harzes basierend auf 100 Gewichtsteilen des Verbundharzes umfasst.

2. Dekorfolie nach Anspruch 1, ferner umfassend 0,1 Gewichtsteile bis 30 Gewichtsteile eines Pigments basierend auf 100 Gewichtsteilen der gesamten Harze der Dekorfolie.

3. Dekorfolie nach Anspruch 2, wobei das Pigment lediglich in der aus dem Verbundharz gebildeten Zwischenschicht enthalten ist.

## Revendications

1. Feuille décorative respectueuse de l'environnement comprenant:
une couche de surface avant formée d'une résine de polyéthylène téréphtalate de glycol (PETG);
une couche de surface arrière tournée vers la couche de surface avant et formée d'une résine de polyéthylène téréphtalate de glycol (PETG); et
une couche intermédiaire interposée entre les couches de surface avant et arrière et formée d'une résine composite comprenant une résine de polyéthylène téréphtalate (PET) et une résine à base d'ester, dans laquelle la résine à base d'ester comprend au moins l'un sélectionné parmi le poly(téréphtalate de butylène) (PBT), le polyéthylène téréphthalate (PET), le polyéthylène naphtalate (PEN) et le poly (cyclohexylènediméthylène téréphtalate) (PCT), et la couche intermédiaire comprend 3 parties en poids à 10 parties en poids de la résine à base d'ester sur la base de 100 parties en poids de la résine composite.

2. Feuille décorative selon la revendication 1, comprenant en outre 0,1 parties en poids à 30 parties en poids d'un pigment à base de 100 parties en poids des résines entières de la feuille décorative.

3. Feuille décorative selon la revendication 2, dans laquelle le pigment est contenu uniquement dans la couche intermédiaire formée de la résine composite.
